# FASCICULE DE BREVET EUROPEEN

(11) **EP 0 845 332 B1**
(45) Date de publication et mention de la délivrance du brevet: **20.02.2002**
(21) Numéro de dépôt: 97402856.5
(22) Date de dépôt: 27.11.1997
(51) Int. Cl.: B25B 27/00

(54) **Dispositif de pose d'un joint d'étanchéité**
Vorrichtung zum Befestigen von Dichtungslippen
Device for placing sealing joints

(30) Priorité: 27.11.1996 FR 9614518
(43) Date de publication de la demande: 03.06.1998
(73) Titulaire: Cooper-Standard Automotive France S.A., 95871 Bezons (FR)
(72) Inventeur: Chardon, Fernand R., 35500 Vitré (FR)
(74) Mandataire: Busnel, Jean-Benoît

(56) Documents cités:
- EP-A- 0 431 827
- EP-A- 0 631 852
- EP-A- 0 647 501
- DE-U- 9 319 329
- FR-A- 2 626 805
- GB-A- 2 237 836

## Description

La présente invention concerne un dispositif de pose d'un joint d'étanchéité et son utilisation pour la pose d'un joint sur une carrosserie de véhicule automobile conformément aux préambules respectifs des revendications 1 et 12.

Plus précisément, elle concerne un dispositif pour la pose d'un joint pourvu d'une pince de fixation sur une feuillure de carrosserie.

Il existe déjà de tels dispositifs qui comprennent notamment une tête déplaçable longitudinalement et parallèlement à la pince et qui porte des éléments de serrage destinés à venir en appui déformant contre le joint, de part et d'autre de la pince (voir GB-A- 2 237 836).

Dans ces dispositifs, les éléments de serrage sont généralement constitués de deux rouleaux en vis-à-vis dont les axes de rotation sont disposés dans un plan perpendiculaire à l'axe longitudinal du joint. Ces rouleaux sont en appui transversal contre la pince par leur face latérale cylindrique et sont déplacés en translation longitudinale par rotation au contact des branches de ladite pince.

Cependant, ces rouleaux sont encombrants du fait que leur diamètre est très supérieur à leur hauteur pour s'adapter aux faibles dimensions de la pince.

Ces dispositifs ne peuvent donc pas être utilisés pour la pose de joints dans des espaces restreints. Ils ne permettent pas non plus la pose de joints pourvus d'un élément tubulaire ou bien d'une ou plusieurs lèvres latérales, car il est difficile, voire impossible, de placer et de faire travailler un rouleau sous une telle lèvre même en dégageant cette dernière vers le haut.

En outre le positionnement initial de la tête sur la pince n'est pas facile car les rouleaux offrent une résistance à la translation de la tête dans un plan perpendiculaire à l'axe longitudinal de la pince.

En effet, avant toute action des rouleaux de serrage, la pince est ouverte et ses branches sont écartées. Pour engager la pince entre les rouleaux, il est donc nécessaire de forcer le joint en appuyant sur la tête perpendiculairement à l'axe longitudinal.

Or, cet effort peut se traduire par une détérioration locale du joint.

Au surplus, lorsque les rouleaux de serrage sont déplacés longitudinalement par rotation et en appui transversal contre la pince, il se produit parfois un léger basculement des rouleaux surtout en présence de joints de sections importantes.

Ce basculement qui trouve son origine dans le manque de stabilité du jeu de rouleaux avec seulement deux faces d'appui opposées sur la pince provoque un décalage de la position des rouleaux selon une direction perpendiculaire à l'axe longitudinal.

Il en résulte des défauts de scrrage qui peuvent compromettre l'étanchéité et la tenue du joint sur la feuillure.

La présente invention a pour but de résoudre ces problèmes techniques de manière satisfaisante.

Ce but est atteint selon l'invention, au moyen d'un dispositif de pose d'un joint d'étanchéité pourvu d'une pince de fixation sur une feuillure de carrosserie du type comprenant notamment une tête déplaçable longitudinalement et parallèlement à la pince et qui porte des éléments de serrage destinés à venir en appui déformant contre le joint de part et d'autre de la pince, caractérisé en ce que les éléments de serrage comprennent au moins une bille montée folle dans un logement sphérique ménagé à l'extrémité d'un support porté par la tête (T) du dispositif.

Selon une caractéristique avantageuse, le dispositif comprend en outre au moins un rouleau moteur disposé en regard de la bille.

De préférence, ledit rouleau moteur est amovible.

Selon une autre caractéristique, ledit support de la bille a un profil en col de cygne.

Selon un mode de réalisation particulier, les éléments de serrage comprennent un train longitudinal de deux billes.

Selon une variante, les éléments de serrage comprennent un jeu de trois billes disposées en triangle.

Selon un autre mode de réalisation, ledit support de bille est susceptible de se déplacer dans un plan transversal à la pince.

De préférence, ledit support de bille comporte un organe de rappel élastique.

Cet organe de rappel est, par exemple, constitué d'une lame ressort pliée en V ou d'un bilame dont la branche externe est solidaire du support de bille et la branche interne est fixée à la tête.

Selon encore une autre caractéristique, ladite tête porte en outre un galet rotatif monté entre les éléments de serrage et destiné à venir en contact de guidage avec la partie supérieure du joint.

Selon une variante, ledit galet a un profil asymétrique avec une zone centrale cylindrique prolongée d'un côté par une zone tronconique et de l'autre côté par une zone concave.

Un autre objet de l'invention est une utilisation du dispositif de l'invention pour la pose d'un joint d'étanchéité de véhicule automobile pourvu d'au moins une lèvre d'étanchéité et d'une pince de fixation sur une feuillure de carrosserie.

La mise en oeuvre du dispositif de l'invention s'effectue en positionnant l'un des éléments de serrage à billes sous la lèvre du joint et en effectuant le resserrement de la pince sous ladite lèvre.

Le dispositif de l'invention facilite considérablement la pose des joints d'étanchéité sur les feuillures de carrosserie de véhicules automobiles.

Il assure, par une stabilité renforcée, un positionnement correct des éléments de serrage par rapport à la pince du joint quelle que soit l'orientation de la feuillure, ce qui réduit les risques de montage défectueux.

La configuration particulièrement ergonomique du support de bille permet en outre d'utiliser le dispositif de l'invention pour la pose de joints de différents profils et en particulier de joints pourvus d'éléments tubulaires et/ou d'une ou plusieurs lèvres latérales.

Le cas échéant, le support de bille et le rouleau moteur seront amovibles et seront disponibles dans différentes géométries et profils pour permettre une adaptation du dispositif à toute situation.

Au surplus, l'organe de rappel élastique du support de bille confère une certaine souplesse aux éléments de serrage et permet un ajustement de la tenue du joint en modifiant la raideur de cet organe.

Par ailleurs, le nombre très restreint de pièces mécaniques en mouvement et le mode spécifique de retenue de la bille dans son logement rendent ce dispositif particulièrement fiable et efficace pour des utilisations intensives.

Le dispositif de l'invention peut être utilisé indifféremment de façon manuelle ou robotisée.

L'invention sera mieux comprise à la lecture de la description qui va suivre accompagnée des dessins sur lesquels :

La figure 1 représente une vue de face d'un premier mode de réalisation du dispositif de l'invention.

La figure 2 représente une vue de face du dispositif de l'invention pendant la pose d'un joint sur une feuillure.

La figure 3 représente une vue de dessous de la tête du dispositif de la figure 1.

La figure 4 représente une vue en coupe partielle selon IV-IV du dispositif de la figure 3.

Les figures Sa, 5b et 5c représentent des vues respectivement en coupe transversale, de face et de côté d'un élément de serrage selon l'invention.

Les figures 6a, 6b et 6c représentent des vues de face de trois modes distincts de réalisation d'un élément de serrage selon l'invention.

La figure 7 représente une vue de profil du dispositif des figures 1 et 2.

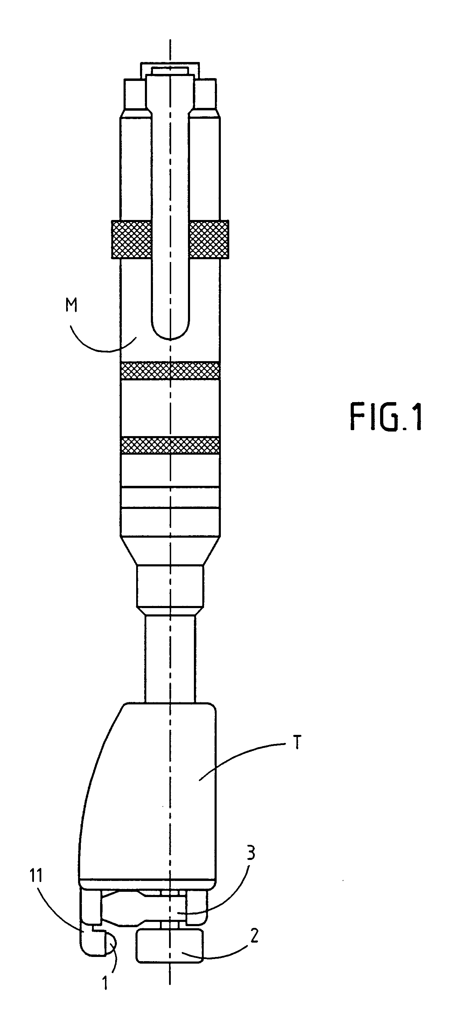

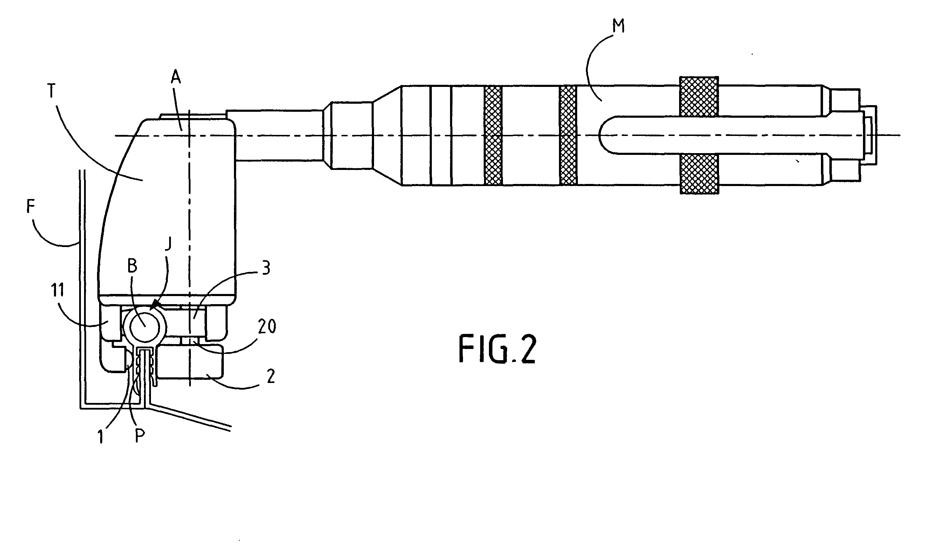

Le dispositif représenté sur les figures 1 et 2 est destiné à la pose d'un joint d'étanchéité J pourvu d'un élément tubulaire B et d'une pince de fixation P, sur une feuillure F de carrosserie.

Ce dispositif comprend une poignée M dont l'extrémité est raccordée à une tête T au moyen d'une articulation A.

La tête T est déplaçable longitudinalement et parallèlement à la pince P et porte des éléments de serrage 1, 2 destinés à venir en appui déformant contre le joint J de part et d'autre de la pince P.

Sur la figure 1, la tête T est disposée dans l'axe de la poignée M alors que, sur la figure 2, la tête T est en position de travail sur un joint J et est disposée, pour des raisons pratiques, perpendiculairement à l'axe de la poignée M.

Les éléments de serrage sont constitués sur un côté de la tête T, d'au moins un et ici d'un unique rouleau 2 entraîné en rotation par un moteur et sur le côté opposé, d'au moins une bille 1 montée folle dans un logement ménagé à l'extrémité d'un support 11.

Le rouleau 2 qui est monté de manière amovible sur l'arbre rotatif 20 du moteur (voir figure 4) assure le déplacement de la tête T le long de la pince P par contact de friction de sa face latérale cylindrique avec la première branche de la pince P située en regard.

La bille 1 est positionnée en vis-à-vis du rouleau 2 en contact d'appui avec la seconde branche de la pince P.

L'écartement entre la bille 1 et le rouleau 2 est déterminé au préalable en fonction des dimensions respectives de la pince P et de la feuillure F et des efforts de serrage recherchés.

La tête T comporte, en outre, un galet rotatif 3 monté entre les éléments de serrage 1, 2 et destiné à venir en contact de guidage avec la partie supérieure du joint J (formée ici de l'élément tubulaire B) ou du dos de la pince P.

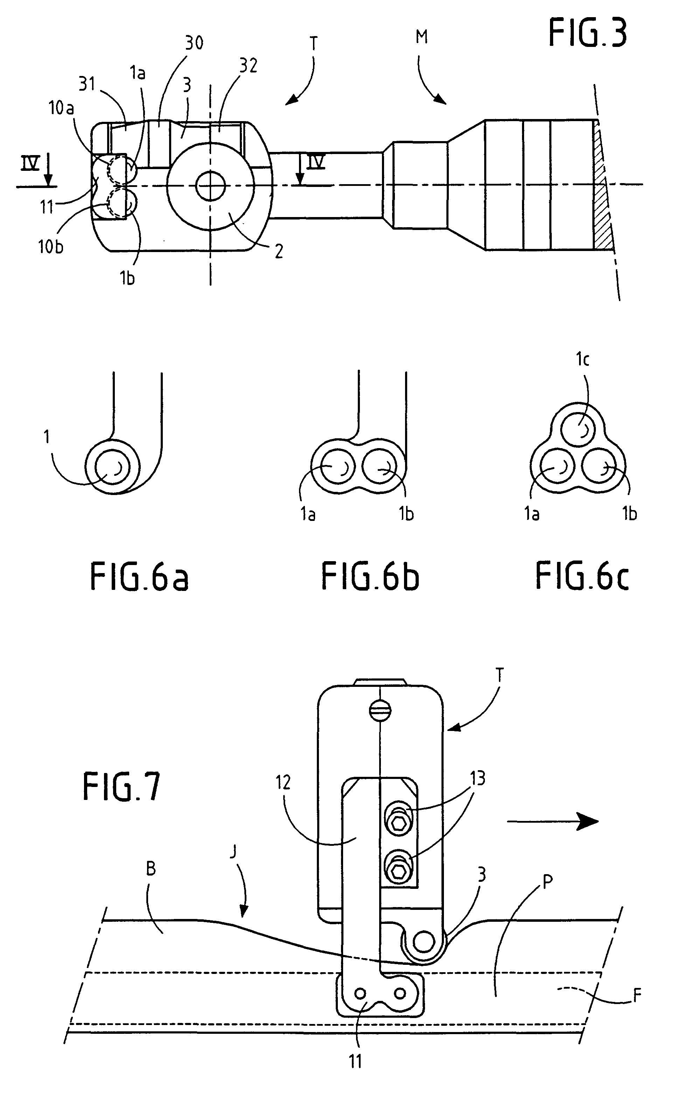

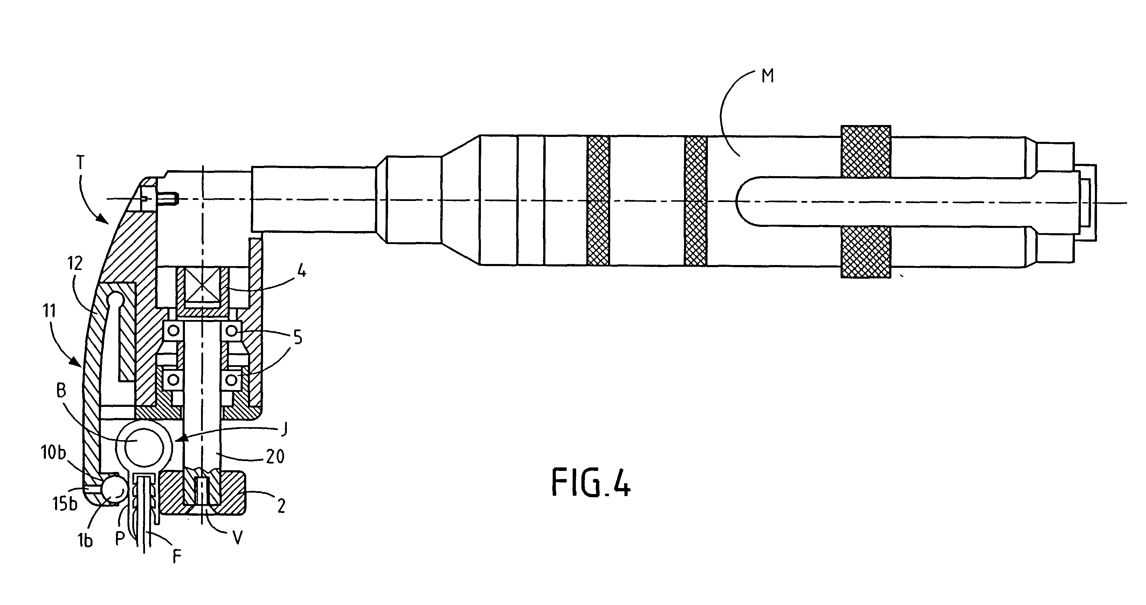

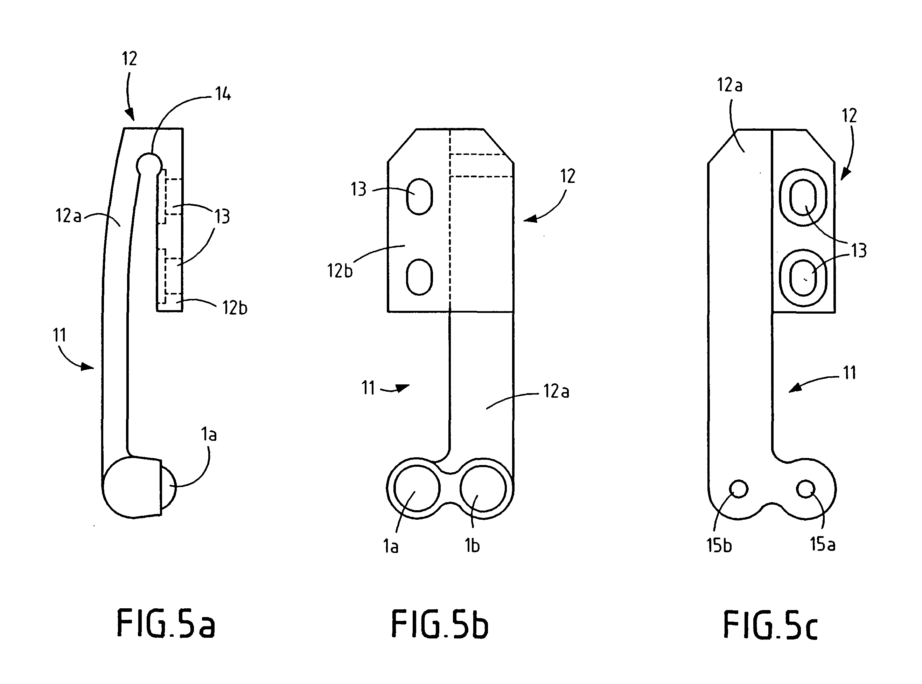

La figure 3 représente le mode de réalisation du dispositif des figures 1 et 2 en vue de dessous.

L'élément de serrage situé du côté extérieur comprend ici un train de deux billes 1a, 1b s'étendant dans la direction longitudinale, en vis-à-vis du rouleau moteur 2. Chaque bille 1a, 1b est maintenue en libre rotation dans un logement 10a, 10b ménagé à l'extrémité du support 11.

Le galet rotatif 3 a un profil asymétrique avec une zone centrale cylindrique 30 prolongée du côté des billes 1a, 1b par une zone tronconique 31 et du côté du rouleau 2 par une zone concave 32.

La figure 4 représente une vue en coupe partielle selon IV-IV du dispositif de la figure 3.

Le support 11 de bille a un profil en col de cygne qui offre un encombrement réduit en particulier avec des billes de faible diamètre, à la différence des rouleaux.

Toutefois, le rouleau 2 est nécessaire pour assurer le déplacement de la tête T puisque les billes ne peuvent assurer cette fonction.

Bien entendu, il est possible de prévoir dans un mode de réalisation non représenté que les éléments de serrage comprennent des billes de part et d'autre de la pince et non pas d'un seul côté. Dans ce cas, le rouleau moteur 2 est alors couplé sur un côté à une ou plusieurs billes.

L'arbre 20 est entraîné par le moteur électrique 4 logé ici dans la tête T et passe dans des paliers 5 avant d'être fixé de manière amovible au rouleau 2 au moyen d'une vis axiale V.

Le support 11 de bille est susceptible de se déplacer dans un plan transversal à la pince P. A cet effet, comme représenté en détail sur les figures 5a, 5b et 5c, il comporte un organe de rappel élastique. Cet organe de rappel est constitué d'une lame ressort 12 pliée en V ou réalisée sous forme d'un bilame. La branche externe 12a de la lame 12 est généralement solidaire du support 11 de bille et est ici réalisée d'une seule pièce avec ledit support. La branche interne 12b est fixée, quant à elle, à la tête T par exemple au moyen de vis passant au travers de lumières elliptiques 13 permettant un réglage de la position verticale du support 11 des billes.

La jonction entre les branches externe 12a et interne 12b comporte, le cas échéant, comme représenté sur la figure 5a, un godet 14 pour améliorer l'effet de charnière.

Le fond des logements sphériques 10a, 10b des billes 1a, 1b qui sont ménagés à l'extrémité du support 11, est éventuellement pourvu de cavités 15a, 15b. Ces cavités débouchent à l'extérieur en offrant des orifices dans lesquels peuvent se fixer des éléments de protection externes permettant de ne pas endommager la carrosserie ou des garnitures décoratives ou fonctionnelles situées aux abords de la feuillure, lors de la pose du joint J.

L'extrémité du support 11 a un profil externe en coquille qui épouse les billes en formant un carénage.

De préférence, l'organe de rappel 12 se rattache au support 11 au niveau du carénage de la bille arrière 1b du train de billes 1a, 1b.

L'organe de rappel permet un débattement élastique de l'élément de serrage à bille dans un plan transversal à la pince P. L'amplitude de ce débattement peut être réglée, en modifiant la raideur du bilame 12a, 12b.

Les figures 6a, 6b et 6c représentent divers modes de réalisation de l'élément de serrage à bille de l'invention.

Cet élément peut comprendre ainsi une seule bille 1 (figure 6a), un train de deux billes 1a, 1b adjacentes (figure 6b) ou bien un jeu de trois billes 1a, 1b, 1c disposées en triangle (figure 6c).

Chaque bille, offre une face d'appui sur la branche de la pince située en regard.

Cette face d'appui a la forme d'une calotte sphérique dont la surface dépend à la fois de l'écartement entre les éléments de serrage en vis-à-vis, de la largeur de la pince du joint et de la raideur de l'organe de rappel 12.

Le mode de réalisation de la figure 6c avec trois billes présente une grande stabilité du fait de la présence de trois zones d'appui.

Les billes sont enfermées dans leur logement par un sertissage effectué de la manière suivante.

Les logements sont initialement formés d'un fond à surface sphérique débouchant à l'extérieur, entre les éléments de serrage, par une zone cylindrique. Après introduction des billes dans leur logement, la zone cylindrique est déformée et partiellement refermée autour de la bille en ne laissant dépasser qu'une portion de sphère en saillie et en ménageant un léger jeu entre la bille et la paroi du logement devenu sphérique.

La figure 7 représente une vue de profil du dispositif de l'invention selon le mode de réalisation des figures 1 et 2 en phase de serrage de la pince P d'un joint J sur la feuillure F. Ce joint est du type comportant au moins une lèvre d'étanchéité s'étendant à partir soit d'une des branches latérales de la pince soit directement à partir de son dos.

L'utilisation du dispositif se fait par rotation du rouleau moteur 2 au contact de la pince P, ce qui déplace la tête T dans le sens de la flèche. Le resserrement des branches de la pince sur la feuillure, par les éléments de serrage, s'effectue en positionnant l'un des éléments de serrage à billes sous la lèvre d'étanchéité du joint, pendant que l'élément tubulaire B est écrasé par le galet 3.

Cette mise en oeuvre est possible du fait du très faible encombrement des billes et de leur support.

Le profil externe des carénages de billes offre une surface de glissement avec la face inférieure de la lèvre.

## Revendications

1. Dispositif de pose d'un joint d'étanchéité (J) pourvu d'une pince de fixation (P) sur une feuillure (F) de carrosserie du type comprenant notamment une tête (T) déplaçable longitudinalement et parallèlement à la pince (P) et qui porte des éléments de serrage (1,2) destinés à venir en appui déformant contre le joint (J) de part et d'autre de la pince (P), **caractérisé en ce que** les éléments de serrage comprennent au moins une bille (1) montée folle dans un logement sphérique (10) ménagé à l'extrémité d'un support (11) porté par le tête (T) du dispositif.

2. Dispositif selon la revendication 1, **caractérisé en ce que** les éléments de serrage (1,2) comprennent au moins un rouleau moteur (2) disposé en regard de la bille (1).

3. Dispositif selon la revendication 2, **caractérisé en ce que** ledit rouleau moteur (2) est amovible.

4. Dispositif selon l'une des revendications précédentes, **caractérisé en ce que** ledit support (11) de la bille (1) a un profil en col de cygne.

5. Dispositif selon l'une des revendications précédentes, **caractérisé en ce que** les éléments de serrage (1,2) comprennent un train longitudinal de deux billes (1a, 1b).

6. Dispositif selon l'une des revendications 1 à 4, **caractérisé en ce que** les éléments de serrage (1,2) comprennent un jeu de trois billes (1a, 1b, 1c) disposées en triangle.

7. Dispositif selon l'une des revendications précédentes, **caractérisé en ce que** ledit support (11) de bille est susceptible de se déplacer dans un plan transversal à la direction longitudinale de la pince (P).

8. Dispositif selon l'une des revendications précédentes, **caractérisé en ce que** ledit support (11) de bille comporte un organe de rappel élastique (12).

9. Dispositif selon la revendication 8, **caractérisé en ce que** ledit organe de rappel (12) est consitué d'une lame ressort (12) pliée en V ou d'une bilame dont la branche externe (12a) est solidaire du support (11) de bille et la branche interne (12b) est fixée à la tête (T).

10. Dispositif selon l'une des revendications précédentes, **caractérisé en ce que** ladite tête (T) porte en outre un galet rotatif (3) monté entre les éléments de serrage (1,2) et destiné à venir en contact de guidage avec la partie supérieure du joint (J).

11. Dispositif selon la revendication 10, **caractérisé en ce que** ledit galet (3) a un profil asymétrique avec une zone centrale cylindrique (30) prolongée d'un côté par une zone tronconique (31) et de l'autre côté par une zone concave (32).

12. Utilisation du dispositif selon l'une des revendications précédentes pour la pose d'un joint d'étanchéité (J) de véhicule automobile pourvu d'au moins une lèvre d'étanchéité et d'une pince de fixation (P) sur une feuillure (F) de carrosserie, **caractérisée en ce que** l'un des éléments de serrage à billes (l) est positionné sous ladite lèvre pendant le resserrement de la pince (P).

## Claims

1. Device for fitting a seal (J) provided with a fixing clamp (P) to a bodywork rebate (F) of the type comprising in particular a head (T) that is displaceable longitudinally and parallel to the clamp (P) and carries clamping members (1, 2) intended to bear against and deform the seal (J) on the one hand and the clamp (P) on the other hand, **characterised in that** the clamping members comprise at least one ball (1) mounted loose in a spherical recess (10) made at the end of a support (11) carried by the head (T) of the device.

2. Device according to Claim 1, **characterised in that** the clamping members (1, 2) comprise at least one driving roller (2) arranged facing the ball (1).

3. Device according to Claim 2, **characterised in that** said driving roller (2) is removable.

4. Device according to one of the preceding claims, **characterised in that** said support (11) for the ball (1) has a swan-neck profile.

5. Device according to one of the preceding claims, **characterised in that** the clamping members (1, 2) comprise a longitudinal train of two balls (1a, 1b).

6. Device according to one of Claims 1 to 4, **characterised in that** the clamping members (1, 2) comprise a set of three balls (1a, 1b, 1c) arranged in a triangle.

7. Device according to one of the preceding claims, **characterised in that** said ball support (11) is capable of being displaced in a plane transverse to the longitudinal direction of the clamp (P).

8. Device according to one of the preceding claims, **characterised in that** said ball support (11) has an elastic return part (12).

9. Device according to Claim 8, **characterised in that** said return part (12) is constituted by a spring blade (12) bent into a V shape or by a bimetallic strip, the outer branch (12a) of which is integral with the ball support (11) and the inner branch (12b) of which is fixed to the head (T).

10. Device according to one of the preceding claims, **characterised in that** said head (T) also carries a rotary roller (3) mounted between the clamping members (1, 2) and intended to come into guiding contact with the upper portion of the seal (J).

11. Device according to Claim 10, **characterised in that** said roller (3) has an asymmetric profile with a cylindrical central zone (30) extended on one side by a truncated conical zone (31) and on the other side by a concave zone (32).

12. Use of the device according to one of the preceding claims for fitting a seal (J) for a motor vehicle provided with at least one sealing lip and a fixing clamp (P) to a bodywork rebate (F), **characterised in that** one of the ball clamping members (1) is positioned under said lip during the tightening of the clamp (P).

## Patentansprüche

1. Vorrichtung zum Befestigen einer Dichtung (J), welche mit einer Befestigungsklemme (P) auf einem Fensteranschlag (F) in einer Karosserie versehen ist, von der Art, welche insbesondere einen in Längsrichtung und parallel zur Klemme (P) verschieblichen Kopf (T) aufweist und Klemmelemente (1, 2) trägt, die dazu bestimmt sind, unter Verformung gegen die Dichtung (J) zu beiden Seiten der Klemme (P) in Anlage zu kommen, **dadurch gekennzeichnet, dass** die Klemmelemente mindestens eine Kugel (1) aufweisen, die frei drehbar in einer kugelförmigen Lagerung (10) angebracht ist, welche am Ende eines Trägers (11) ausgebildet ist, der auf dem Kopf (T) der Vorrichtung angebracht ist.

2. Vorrichtung nach Anspruch 1, **dadurch gekennzeichnet, dass** die Klemmelemente (1, 2) mindestens eine Antriebsrolle (2) aufweisen, die gegenüber der Kugel (1) angeordnet ist.

3. Vorrichtung nach Anspruch 2, **dadurch gekennzeichnet, dass** die Antriebsrolle (2) abnehmbar ist.

4. Vorrichtung nach einem der vorhergehenden Ansprüche, **dadurch gekennzeichnet, dass** der Träger (11) für die Kugel (1) das Profil einer Ausladung aufweist.

5. Vorrichtung nach einem der vorhergehenden Ansprüche, **dadurch gekennzeichnet, dass** die Klemmelemente (1, 2) in Längsrichtung eine Folge von zwei Kugeln (1a, 1b) aufweist.

6. Vorrichtung nach einem der Ansprüche 1 bis 4, **dadurch gekennzeichnet, dass** die Klemmelemente (1, 2) einen Satz von drei Kugeln (1a, 1b, 1c) aufweist, die in Dreieckform angeordnet sind.

7. Vorrichtung nach einem der vorhergehenden Ansprüche, **dadurch gekennzeichnet, dass** der Träger (11) für die Kugel in der Lage ist, sich in einer Ebene quer zur Längsrichtung der Klemme (P) zu bewegen.

8. Vorrichtung nach einem der vorhergehenden Ansprüche, **dadurch gekennzeichnet, dass** der Träger (11) für die Kugel ein Organ zur elastischen Rückstellung (12) aufweist.

9. Vorrichtung nach Anspruch 8, **dadurch gekennzeichnet, dass** das Rückstellorgan (12) aus einer Blattfeder (12) besteht, die V-förmig geboten ist, oder aus einer zweilamelligen Feder, deren außenliegender Schenkel (12a) fest mit der Träger (11) für die Kugel verbunden ist und deren innenliegender Schenkel (12b) am Kopf (T) befestigt ist.

10. Vorrichtung nach einem der vorhergehenden Ansprüche, **dadurch gekennzeichnet, dass** der Kopf (T) darüber hinaus eine Drehrolle (3) aufweist, die zwischen den Klemmelementen (1, 2) angebracht und dazu bestimmt ist, mit dem oberen Abschnitt der Dichtung (J) in Führungskontakt zu gelangen.

11. Vorrichtung nach Anspruch 10, **dadurch gekennzeichnet, dass** die Rolle (3) ein asymmetrisches Profil mit einem zylinderförmigen Mittelbereich (30) aufweist, der auf einer Seite durch einen kegelstumpfförmigen Bereich (31) und auf der anderen Seite durch einen konkaven Bereich (32) verlängert wird.

12. Verwendung der Vorrichtung nach einem der vorhergehenden Ansprüche zum Befestigen einer Dichtung (J) in einem Kraftfahrzeug, das mit mindestens einer Dichtungslippe und einer Befestigungsklemme (P) auf einem Fensteranschlag (F) in einer Karosserie versehen ist, **dadurch gekennzeichnet, dass** eines der Klemmelemente mit Kugeln (1) unter der während des Nachklemmens der Klemme (P) unter der Dichtlippe positioniert wird.
